# EUROPEAN PATENT SPECIFICATION

(11) **EP 4 225 704 B1**
(45) Date of publication and mention of the grant of the patent: **28.08.2024**
(21) Application number: 21798114.1
(22) Date of filing: 06.10.2021
(51) Int. Cl.: C02F 1/68, C02F 1/06, C02F 1/20, C02F 1/42, C02F 1/44, C02F 1/66, C02F 103/02

(54) **SYSTEM AND PROCESS OF MINERALIZING DISTILLED WATER WITH REPLENISHABLE MINERAL CONCENTRATE SOLUTIONS**
SYSTEM UND VERFAHREN ZUR MINERALISIERUNG VON DESTILLIERTEM WASSER MIT ERNEUERBAREN MINERALKONZENTRATLÖSUNGEN
SYSTÈME ET PROCÉDÉ DE MINÉRALISATION D'EAU DISTILLÉE AVEC SOLUTIONS CONCENTRÉES MINÉRALES RENOUVELABLES

(30) Priority: 06.10.2020 GB 202015801
(43) Date of publication of application: 16.08.2023
(73) Proprietor: NAMAYA MINERAL WATER LTD, 4729132 Ramat Hasharon (IL)
(72) Inventor: LEVY, Amnon, 4729132 Ramat Hasharon (IL)
(74) Representative: Fresh IP
(86) International application number: PCT/IB2021/059177
(87) International publication number: WO 2022/074586

(56) References cited:
- WO-A1-2009/047764
- KR-A- 20120 115 873
- US-A1- 2011 100 890
- US-B2- 10 730 766

## Description

### TECHNICAL FIELD

In general, the present invention pertains to the art of water treatment. In particular, the invention relates to system and process of mineralizing distilled water with replenishable mineral concentrate solutions.

### BACKGROUND ART

It is believed that the current state of the art is represented by the following patent literature: US10206533, US3212999, US3785492, US5427682, US5737923, US6805774, US9598295, US10226747, US2010300868, US2010032386, US2013255280, WO2013181891, US2017367521 , US2020055753, CN103466661 and KR100920124.

US20190152757 discloses a beverage supplementation device for a beverage dispenser, adapted to supplement a beverage flowing from a beverage source to a beverage sink with a plurality of supplementation fluids. In US20190152757 there are a plurality of beverage conduits, wherein each beverage conduit comprises a beverage inlet that is adapted to be coupled to the same beverage source supplying beverage to be supplemented, and wherein each beverage conduit comprises an outlet; and at least two supplementation conduits, wherein each supplementation conduit has a supplementation inlet adapted to be coupled to a supplementation source providing at least one supplementation fluid, wherein each supplementation conduit is coupled with a different supplementation source and wherein each supplementation conduit comprises an outlet; wherein the outlet of each supplementation conduit is connected to a different beverage conduit; and wherein the outlets of the beverage conduits are coupled with the same beverage sink. WO2009/047764A1, US10730766B2, KR20120115873A and US2011 /100890A1 disclose further systems and methods for mineralizing water.

### SUMMARY OF THE INVENTION

The following summary of the invention is provided in order to provide a basic understanding of some aspects and features of the invention. This summary is not an extensive overview of the invention. Its sole purpose is to present some concepts of the invention in a simplified form as a prelude to the more detailed description that is presented below.

The invention was made in view of the deficiencies of the prior art and provides systems, methods and processes for overcoming these deficiencies. Water produced by reverse osmosis is aggressive and very demineralized. It cannot be used directly as a source of drinking water. Remineralization is essential in order to overcome these problems.

According to one aspect of the invention, there is provided a process of mineralizing distilled water as defined in appended claim 8, the process comprising the steps of providing an input of distilled water with substantially reduced mineral content; splitting input into a primary portion, configured for end user consumer, and into a secondary portion, configured for generating a mineralizing concentrate solution; dissolving carbon dioxide in secondary portion of distilled water input, thereby producing a flow of carbon-dioxide-enriched distilled water; providing at least one first column and at least one second column, each column comprising an interior volume; filling interior volume of said first column with a first mineral matrix; filling said interior volume of said second column with a second mineral matrix; infiltrating secondary portion of distilled water input through said first mineral matrix in said first column, thereby generating a first mineralizing concentrate solution; infiltrating said second portion of said distilled water input through said second mineral matrix in said second column, thereby generating a second mineralizing concentrate solution, the first and second mineral matrices of said first and second columns being different to form different mineral concentrate solutions; collecting a stock of said first mineralizing concentrate solution; collecting a stock of said second mineralizing concentrate solution; controllably combining a predefined amount of said first mineralizing concentrate solution with said primary portion of distilled water input; controllably combining a predefined amount of said second mineralizing concentrate solution with said primary portion of distilled water input thereby controllably combining a redefined amount of the first and second mineralising concentrate solutions with the primary portion of the distilled water input and dispensing a homogenous mineralized water mixture to end user consumer.

Carbon dioxide, in gaseous form, is dissolved in a portion of distilled water input, for forming an acidic pH. This step of water carbonization facilitates the dissolution of the minerals by acidifying the distilled water.

In the embodiments where the mineralized water to be produced is carbonated water, an optional gasification step is introduced. The end consumer can have the choice of taking hot water, temperate water, that is to say at room temperature, or cooled water. Heating or cooling steps can then take place. Cooling can optionally be implemented before or after gasification.

Another aspect of the invention is directed towards a system of mineralizing distilled water comprising an input of distilled water, the system being as defined by claim 1 of the appended claims. The distilled water of the input is characterized by having a significantly reduced or eliminated mineral concentration. The distilled water input is typically pressurized.

The system comprises a splitter. The splitter is operationally connected to the input and is configured for splitting the distilled water input into a primary portion and secondary portion. The primary portion of the distilled water input is conveyed by a first conduit operationally connected to the splitter. The secondary portion of the distilled water input is conveyed by a second conduit operationally connected to the splitter.

The system further comprises a carbonator. The carbonator is configured for dissolving carbon dioxide in the secondary portion of the distilled water input.

In addition, the system further comprises a first column which is operationally connected to the carbonator. The first column comprises an interior volume, fillable with the mineral matrix. The mineral matrix is configured to generate a first mineralizing concentrate solution. The system further comprises at least one second column, comprising an interior volume, operationally connected to said carbonator. The interior volume of the second column is fillable with a second mineral matrix configured for being infiltrated by water of said second portion of distilled water input to generate a second mineralizing concentrate solution, the first and second mineral matrices of the first and second columns being different to form different mineral concentrate solutions.

Mineralization by dolomite is advantageous in that it provides a mineralization in at least important elements: calcium, magnesium and bicarbonate. Dolomite is considered hardly soluble. In some embodiments, the amount of calcium and magnesium ions present in the mineralizing concentrate solution is partially dependent on the concentration of CO2 in the distilled water input.

Calcite is a highly pure natural crystalline of calcium carbonate with multiples applications in water treatment. Calcite is considered hardly soluble but, if carbon dioxide is dissolved in distilled water, a portion becomes carbonic acid. In some embodiments, when the distilled water input passes through column of calcite, the product dissolves little by little leaving a dose of calcium bicarbonate. This increases the hardness, alkalinity and pH, thanks to the natural equilibriums that exist in the water.

The system further comprises first and second concentrate stock tanks which are operationally connected to the first and second columns. Each concentrate stock tank is configured for collecting a stock of the first or second mineralizing concentrate solution.

The system further comprises at least first and second mixing modules connected to the first or second column and to the conduit. The mixing module is configured to produce a mineralized water mixture, by adding a predetermined amount of the first or second mineralizing concentrate solution to the distilled water.

The system further comprises a dispensing module which is connected to the first and second mixing modules. The dispensing module is configured for dispensing the homogenous mineralized water mixture to the end user consumer.

In some embodiments, the system in its entirety is accommodated in a cooled environment, such as an electric cooler.

The consumer can have the choice of taking hot water, temperate water, that is to say at room temperature, or cooled water. In the case where the mineralized water to be produced is carbonated water, a gasification step is optionally performed. In some examples, the mineralized water mixture passes through a thermoelectric module or any cooling module allowing the water to be cooled, or an electric heating module allowing the water to be heated. It can be expected that the cooling and heating units operate continuously, so that cold or hot water is instantly available.

### DEFINITIONS

The terms water or drinking water refer to water that is fit for consumption by a living organism. In certain embodiments the living organism is a "mammal" or "mammalian", where these terms are used broadly to describe organisms which are within the class mammalia, including the orders carnivore, rodentia and primates or humans.

The disclosed systems, in certain instances, optionally utilize distilled water. In some embodiments, distilled water is generated by vacuum distillation, which may include boiling of water and collecting the water vapor, having a significantly reduced or eliminated mineral concentration. In some versions, distilled water is generated by multistage flash distillation. In some variations distilled water is generated by reverse osmosis processes. It should be appreciated however that distilled water, as referred to herein, is considered distilled regardless of the nature of the distillation process implemented to produce it, as long as such distilled water has significantly reduced or eliminated mineral content. Moreover, the distilled water is typically has significantly reduced or eliminated non-mineral, such as metal ions, heavy metals, organic molecules, etc.

In certain embodiments, distillation of the disclosed systems utilizes reverse osmosis. In some aspects, reverse osmosis implements pressure and/or one or more semipermeable membranes. In certain versions of reverse osmosis, water is passed through one or more semipermeable membranes in order to remove salt and/or minerals and/or other impurities therefrom.

The term replenishable mineral concentrate solution as referred to herein is to be construed as including any mineral concentrate solution that is produced from the same distilled water input.

The term minerals as referred to herein are defined as naturally occurring inorganic solids. Minerals typically have a definite chemical composition and an ordered internal structure. Mineral may be a naturally occurring homogeneous substance having definite physical properties and chemical composition and, if formed under favorable conditions, a definite crystal form.

The term calcite as referred to herein is to be construed as including any carbonate mineral containing carbonate polymorph of calcium. Calcite includes other polymorphs of calcium carbonate, namely the minerals known as aragonite and vaterite. Ground calcium carbonate is optionally processed through a treatment such as grinding, screening and/or fractionizing by wet and/or dry. It is known to the skilled person that ground calcium carbonate can inherently contain a defined concentration of magnesium, such as it is the case for dolomitic calcite.

The term dolomite as referred to herein is to be construed as including any mineral of calcium magnesium carbonate, particularly with chemical composition of CaMg(CO3)2. Dolomite includes the primary component of the sedimentary rock known as dolostone and the metamorphic rock known as dolomitic marble as well as limestone that contains some dolomite, which known as dolomitic limestone.

The term printed circuit board and/or acronym PCB, as referred to herein, should be construed as encompassing any type of a circuit board, not intended to limit to any particular board type or production technique, including inter alia non-printed circuit boards. The term printed circuit board and/or acronym PCB particularly include any type of structure configured to mechanically support and/or electrically connect electric and electronic components, such as: Printed Wire Boards (PWB), Printed Circuit Assemblies (PCA), Printed Circuit Board Assemblies (PCBA), Circuit Card Assemblies (CCA), Flexible Circuit Boards (FCB), integrated circuits (IC), monolithic integrated circuits (often referred to as a chips or microchips), chipsets and etc. The term printed circuit board and/or acronym PCB optionally include embedded software, written to control machines or devices that are not typical computers. Embedded software is specialized for the particular hardware and sometimes used interchangeably with the term firmware. A characteristic of embedded software is that no or at least not all functions thereof are initiated and/or controlled via a human interface but rather through machine-interfaces instead.

By "operationally connected" and "operably coupled", as used herein, is meant connected in a specific way (e.g., in a manner allowing water to move and/or electric power to be transmitted) that allows the disclosed system and its various components to operate effectively in the manner described herein.

### DESCRIPTION OF THE DRAWINGS

The present invention will be understood and appreciated more comprehensively from the following detailed description taken in conjunction with the appended drawings in which:
FIG 1 is a schematic block diagram of a system for mineralizing distilled water, falling outside the scope of the present invention;
FIG 2 is a flowchart of a method of mineralizing distilled water, falling outside the scope of the present invention;
FIG 3 is a block diagram of a system for mineralizing distilled water, according to an embodiment of the present invention;
FIG 4 is a flowchart of an embodiment of the method of mineralizing distilled water, according to the present invention.

While the invention is susceptible to various modifications and alternative forms, specific embodiments thereof have been shown merely by way of example in the drawings. The drawings are not necessarily complete and components are not essentially to scale; emphasis instead being placed upon clearly illustrating the principles underlying the present invention.

### DETAILED DISCLOSURE OF EMBODIMENTS

Illustrative embodiments of the invention are described below. In the interest of clarity, not all features of actual implementation are described in this specification.

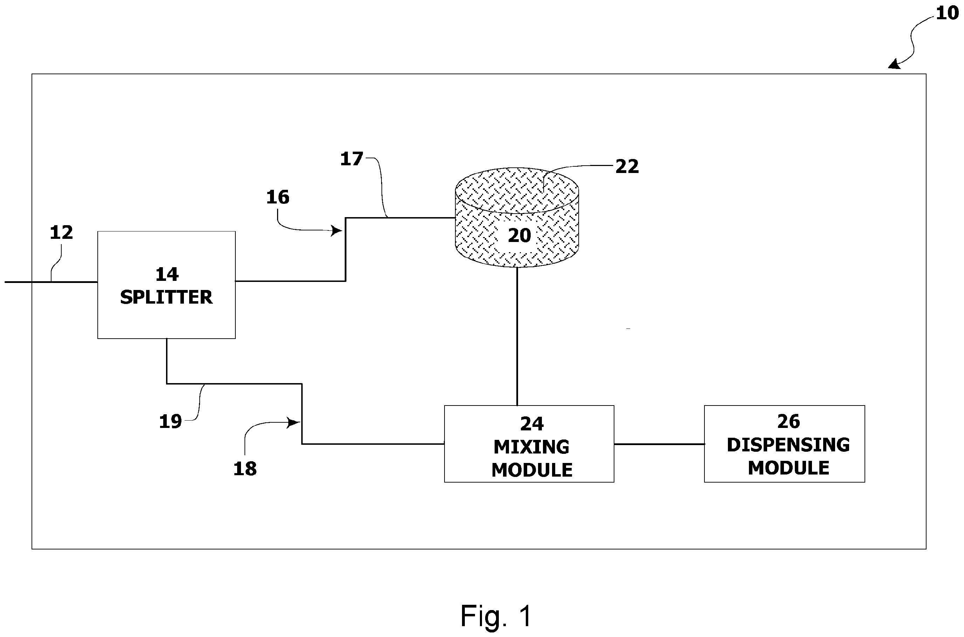

Reference is now made to FIG 1, showing system 10 for mineralizing distilled water. System 10 comprises input 12 of distilled water. Distilled water of input 12, as defined hereinabove, is characterized by having a significantly reduced or eliminated mineral concentration. It should be appreciated however that distilled water, as defined hereinabove, is considered distilled regardless of the nature of the distillation process implemented to produce it.

Distilled water input 12 of system 10 is generated by vacuum distillation, boiling of water and collecting the water vapor or by multistage flash distillation, whereas in other examples distilled water is generated by reverse osmosis processes. In other embodiments, distilled water input 12 of system 10 by reverse osmosis, implementing pressure and/or semipermeable membranes, in order to remove salt and/or minerals and/or other impurities therefrom. Distilled water input 12 of system 10 is typically pressurized.

System 10 further comprises splitter 14. Splitter 14 of system 10 is operationally connected to input 12. Splitter 14 is configured for splitting distilled water input 12 into a primary portion 18 and secondary portion 16. Primary portion 18 of distilled water input 12 is conveyed by a first conduit 19 operationally connected to splitter 14. Secondary portion 16 of distilled water input 12 is conveyed by a second conduit 17 operationally connected to splitter 14. In some examples, splitter 14 comprises an inlet valve configured for the entry of distilled water, and two outlet valves allowing the water to be conveyed to first conduit 19 and second conduit 17. In some examples, splitter 14 is connected to a pressure regulator valve that controls the pressure of distilled water input 12. In some examples, splitter 14 is connected to a flow regulator valve or baffle that controls the flow of distilled water input 12.

System 10 further comprises at least one column 20. Column 20 is operationally connected to the second conduit 17. Column 20 comprises an interior volume, fillable with mineral matrix 22. In some examples, column 20 may be a column of minerals. The term "column" is to be construed as a matrix or cartridge comprising solid salts and/or minerals which dissolve or partly dissolve when the distilled water passes through the column. Typically, the column comprises mineral composition having a low solubility in water. These soluble minerals are generally calcium and magnesium. The column exemplarily contains dolomite, which is a mixed carbonate of calcium and magnesium, or calcite mainly comprising calcium carbonate. In some examples, column 20 is connected to an electrical conductivity or EC meter (not shown) and/or a pH meter and/or pH sensor and/or salinity sensor and/or total dissolved solids (TDS) sensor, configured to monitor and convey to the controller (not shown) of system 10 the acidity and/or conductivity of the of first mineralizing concentrate solution collected from the column 20.

Distilled water input 12 is subjected to adding minerals. In particular, elements such as calcium and magnesium, typically in the form of such cations as Ca2+ and Mg2+, as well as optionally carbonate, particularly in the form of bicarbonate anion HCO3, are often desirable inter alia because these ions are partly responsible for conferring a pleasant taste to the water. For example, dolomite that is a natural mineral formed by presence of both calcium and magnesium in limestone is optionally used for mineralization of distilled water.

Mineral matrix 22 is configured for been infiltrated by secondary portion 16 of distilled water input 12, so that to generate a mineralizing concentrate solution (not shown). Mineralizing concentrate solution is configured for addition in predefined amounts to the distilled water, so as to obtain the water with mineral content profile desired by the end consumer.

System 10 further comprises mixing module 24. Mixing module 24 of system 10 is connected to column 20 and to the first conduit 17. Mixing module 24 is configured for combining a predefined amount of mineralizing concentrate solution with primary portion 16 of distilled water input 12 in first conduit 19. Mixing module 24 is configured to produce mineralized water mixture, by mixing the mineralizing concentrate solution with primary portion 16 of distilled water input 12. The amount of mineralizing concentrate solution mixed with the distilled water is determined in such a way, so as to confer to the mineralized water mixture desired qualities, individually configurable for each pouring.

For example, mixing module 24 is optionally an injector, preferably employing a peristaltic pump. In some examples, mixing module 24 induces turbulence in the water which circulates therein in order to optimize the mixing between primary portion 16 of distilled water input 12 in first conduit 19 and a predefined amount of mineralizing concentrate solution. Mixing module 24 enables to obtain homogeneous mixture and dosing of the mineralizing concentrate solution. System 10 further comprises dosimeter (not shown), such as a peristaltic pump, which is configured to measure and predefine the amount of mineralizing concentrate solution required by each consumer. In some embodiments, system 10 further comprises an electrical conductivity or EC meter (not shown) and/or a pH meter and/or pH sensor and/or salinity sensor and/or total dissolved solids (TDS) sensor, downstream to mixing module 24, configured to monitor and convey to the controller (not shown) of system 10 the acidity and/or conductivity of the of the mineralized water mixture.

System 10 further comprises dispensing module 26. Dispensing module 26 of system 10 is connected to mixing module 24. Dispensing module 26 of system 10 is configured for dispensing mineralized water mixture to end user consumer. In some examples dispensing module 26 comprises a tap (not shown). Tap's opening is arranged vertically downwards, so that the water poured out gravitationally fall underneath the tap (not shown). For example, upon opening the tap, the dosimeter administrates a predetermined amount of mineralizing concentrate solution into mixing module 24 and then combines the predetermined amount of mineralizing concentrate with distilled water input 12 in first conduit 19, so that a desired mineralized water mixture is formed and dispensed through to the tap.

The consumer can have the choice of taking hot water, temperate water, that is to say at room temperature, or cooled water. In the case where the mineralized water to be produced is carbonated water, a gasification step is included. In some examples, the mineralized water mixture passes through a thermoelectric module allowing the water to be cooled, or an electric heating module allowing the water to be heated. It can be expected that the cooling and heating units operate continuously, so that cold or hot water is instantly available.

System 10 may further comprise a control module or controller (not shown). Control module or controller typically includes an electrical power source, a PCB and electronic components. Control module or controller is configured for controlling the operation of electric and/or electronic components of system 10. Some control modules or controllers include a microprocessor and operative memory (RAM) and my further include connectivity to computer network, e.g. loT enabled.

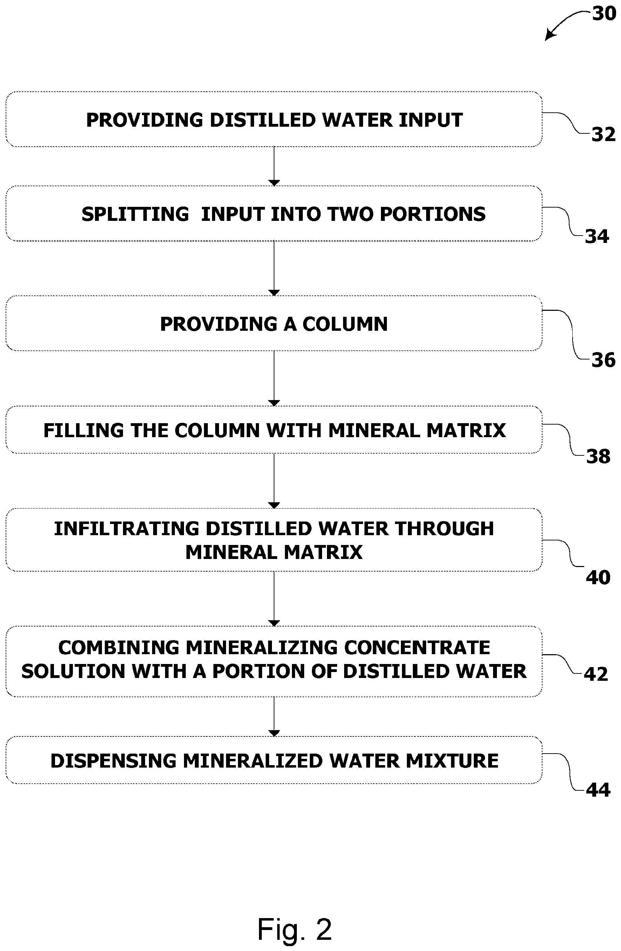

Reference is now made to FIG 2, showing a flowchart of method 30 of mineralizing distilled water. Method 30 includes a step 32 of providing an input of distilled water. Particularly, as described above, distilled water input 12, is characterized by having a significantly reduced or eliminated mineral concentration. It should be appreciated however that distilled water, as defined hereinabove, is considered distilled regardless of the nature of the distillation process implemented to produce it.

Distilled water may be generated by vacuum distillation, boiling of water and collecting the water vapor or by multistage flash distillation, whereas in other examples distilled water is generated by reverse osmosis processes. In other embodiments, distilled water by reverse osmosis, implementing pressure and/or semipermeable membranes, in order to remove salt and/or minerals and/or other impurities therefrom. As described above, distilled water is typically pressurized.

Method 30 includes step 34 of splitting distilled water input into a primary portion and a secondary portion. Particularly, as shown in FIG 1, primary portion 18 of distilled water input 12 is conveyed by first conduit 17 and distilled water input 12 of secondary portion 18 is conveyed by second conduit 19. In embodiments of the invention, carbon dioxide, in gaseous form, is dissolved in distilled water input 12 between step 34 and step 36 for pH control and optionally induced acidification of the secondary portion 18 is conveyed by second conduit 19. The carbonization between steps 34 and 36 facilitates the dissolution of the minerals and/or acidifies the distilled water of secondary portion 18 is conveyed by second conduit 19.

Method 30 includes step 36 of providing at least one column comprising an interior volume. As shown in FIG 1, column 20 is configured to accommodate minerals and/or ion exchange resin. Method 30 typically further includes step 38 of filling interior volume of column with mineral matrix.

Method 30 includes step 40 of method 30 includes passing the distilled water through the mineral matrix of at least one column. In some embodiments, step 40 includes infiltrating secondary portion of distilled water input, through mineral matrix in column, thereby generating a mineralizing concentrate solution. The passing of the distilled water through the mineral matrix of at least one column facilities the dissolution of minerals in the column and forming mineral concentrate solution, thereby continuously replenishing the stock of mineralizing concentrate solution.

Method 30 includes step 42, of controllably combining a predefined amount of mineralizing concentrate solution with primary portion of distilled water input, thereby producing a mineralized water mixture. As shown in FIG 1, a homogeneous mineralized water mixture is obtained by mixing module 24. In some embodiments, method 30 includes step 44 of dispensing mineralized water mixture to the consumer, rendering the mineralized water mixture available through a dispensing module.

Several post-processing steps are optionally implemented after step 44. In the case where the mineral water to be produced is carbonated water, a gasification step is optionally implemented after step 42. The end consumer can have the choice of hot water, temperate water or cooled water. Heating or cooling steps can accordingly take place. Cooling is optionally be implemented before or after gasification.

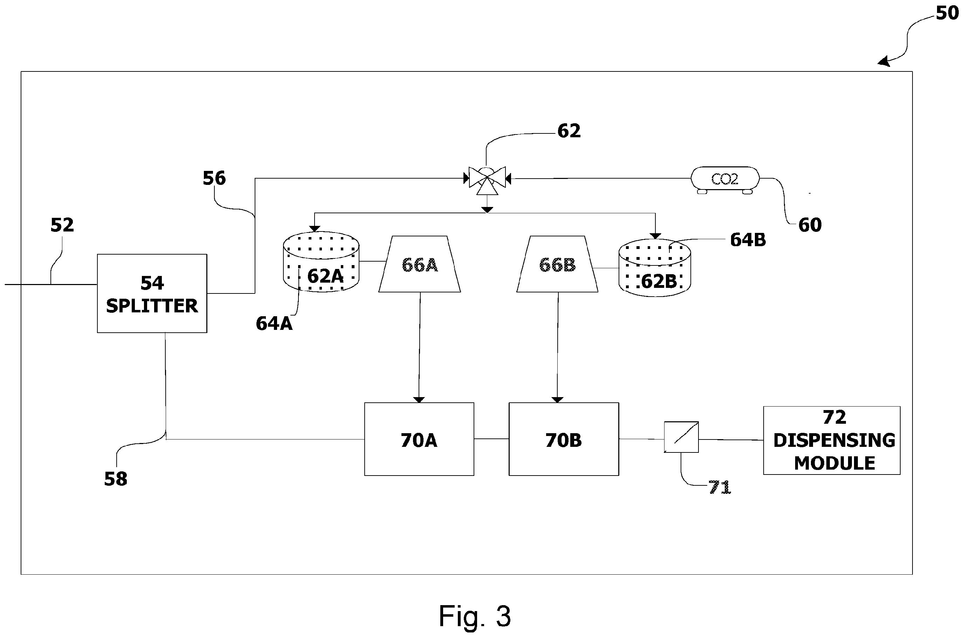

In accordance with some preferred embodiments of the present invention, reference is now made to FIG 3, showing system 50 for mineralizing distilled water.

System 50 comprises input 52 of distilled water, which is as defined hereinabove, is characterized by having a significantly reduced or eliminated mineral concentration. Distilled water input 52 of system 50 is typically pressurized.

In some embodiments, input 52 of system 50 includes a distilled water storage tank (not shown), configured for storing a stock of distilled water. In such embodiments, where input 52 of system 50 includes a distilled water storage tank (not shown), the distilled water storage tank (not shown) further optionally includes a level meter, configured to provide information about the level of the distilled water stored in the distilled water storage tank (not shown). In some embodiments, input 52 of system 50 includes a temperature sensor and transmitter (not shown), configured to convey to the controller (not shown) of system 50 the temperature measurement of distilled water input 52.

System 50 further comprises splitter 54. Splitter 54 of system 50 is operationally connected to input 52. Splitter 54 is configured for splitting distilled water input 52 into a primary portion and a secondary portion. The primary portion of distilled water input 52 is conveyed by first conduit 58 operationally connected to splitter 54, whereas the secondary portion of distilled water input 52 is conveyed by second conduit 56 operationally connected to splitter 54. In some embodiments, first conduit 58 of system 50 further comprises a controllable pump and/or a controllable baffle, configured for controlling the flow of the portion of distilled water input 52 through first conduit 58.

In some examples, splitter 54 comprises an inlet valve configured for the entry of distilled water and two outlet valves allowing the water to be bifurcated into the primary portion conveyed by first conduit 58 and secondary portion conveyed by second conduit 56. In some examples, splitter 54 is connected to a pressure regulator valve that controls the pressure of distilled water input 52. In some examples, splitter 54 is connected to a flow regulator that controls the flow of distilled water input 52. In some examples, the inlet valve and/or either of the two outlet valves are check valves, constraining the flow therethrough only to one direction.

System 50 further comprises carbonator 62. Carbonator 62 is operationally connected to second conduit 56 and receives the secondary portion of distilled water input 52. Carbonator 62 is configured for dissolving carbon dioxide in the secondary portion of distilled water input 52. Carbonator 62 of system 50 is connected to carbon dioxide supply 60. In some examples, a valve (not shown) controls the flow of the carbon dioxide from carbon dioxide supply 60, and a controller (not shown) controls over the administration of the carbon dioxide into distilled water input 52 by carbonator 62. In some examples, a valve or other constituent (not shown) controls the pressure of the carbon dioxide from carbon dioxide supply 60, and a controller (not shown) controls over the administration of the carbon dioxide into distilled water input 52 by carbonator 62.

System 50 further comprises at least one first column 62A. Column 62A is operationally connected to carbonator 62. In some embodiments, system 50 further comprises a controllable pump (not shown) and/or controllable baffle or valve (not shown), disposed in-between at least one first column 62A and carbonator 62, configured for controlling the flow through at least one first column 62A. Column 62A comprises an interior volume, fillable with first mineral matrix 64A. First mineral matrix 64A is configured for been infiltrated by water of the secondary portion of distilled water input 52, so as to generate first mineralizing concentrate solution.

System 50 further comprises at least one second column 62B. Column 62B is operationally connected to carbonator 62. In some embodiments, system 50 further comprises a controllable pump (not shown) and/or controllable baffle or valve (not shown), disposed in-between at least one second column 62B and carbonator 62, configured for controlling the flow through at least one second column 62B. Column 62B comprises an interior volume, fillable with second mineral matrix 64B. Second mineral matrix 64B is configured for been infiltrated by water of secondary portion 56 of distilled water input 52 so as to generate second mineralizing concentrate solution 66B.

Columns 62A and/or 62B are filled with minerals of different types, so as to form two different mineral concentrate solutions. An example of Dolomite is noted as expedient, by facilitating mineralization with important elements, namely calcium and magnesium. In some examples, the amount of calcium and magnesium ions present in first mineralizing concentrate solution is partially dependent on the concentration of CO2 in the distilled water input 52.

In other examples, Calcite that is a highly pure natural crystalline of calcium carbonate is noted as expedient for water mineralization. Upon dissolving carbon dioxide in distilled water, a portion thereof forms carbonic acid. In some embodiments, when the distilled water input 52 passes through column 62B filled with Calcite, the carbonic acid dissolves the matrix, forming a mineral concentrate containing calcium bicarbonate. This increases the hardness and alkalinity pH without risk of overconcentrating, due to the natural equilibriums that is the in the column.

System 50 further comprises first concentrate stock tank 66A. First concentrate stock tank 66A is operationally connected to first column 62A. First concentrate stock tank 66A is configured for collecting a stock of first mineralizing concentrate solution. First concentrate stock tank 66A optionally comprises an inlet and/or outlet pressure relief valve (not shown). In some examples the inlet and/or outlet pressure relief valve (not shown) functions autonomously, upon exceeding a predetermined pressure threshold; whereas in other examples the inlet and/or outlet pressure relief valve (not shown) is controlled by electric controller, configured for opening and/or closing the pressure relief valve (not shown) upon demand.

In some embodiments, first concentrate stock tank 66A typically comprises an electrical conductivity or EC meter (not shown) and/or a pH meter and/or pH sensor and/or salinity sensor and/or total dissolved solids (TDS) sensor, which is/are used to evaluate the level of mineral concentration in the water, configured to monitor and convey to the controller (not shown) of system 50 the acidity or conductivity of the stock of first mineralizing concentrate solution collected in the first concentrate stock tank 66A. In some embodiments, first concentrate stock tank 66A optionally comprises a level meter, configured to provide information about the level of first mineralizing concentrate solution in concentrate stock tank 66A. In some embodiments, concentrate stock tank 66A includes a temperature sensor and transmitter (not shown), configured to convey to the controller (not shown) of system 50 the temperature measurement of first mineralizing concentrate solution 66A in concentrate stock tank 66A.

System 50 further comprises second concentrate stock tank 66B. Second concentrate stock tank 66B is operationally connected to second column 62B. Second concentrate stock tank 66B is configured for collecting a stock of second mineralizing concentrate solution. Second concentrate stock tank 66B optionally comprises an inlet and/or outlet pressure relief valve (not shown). In some examples the inlet and/or outlet pressure relief valve (not shown) functions autonomously, upon exceeding a predetermined pressure threshold; whereas in other examples the inlet and/or outlet pressure relief valve (not shown) is controlled by electric controller, configured for opening and/or closing the pressure relief valve (not shown) upon demand.

In some embodiments, second concentrate stock tank 66B typically comprises an electrical conductivity or EC meter (not shown) and/or a pH meter, configured to monitor and convey to the controller (not shown) of system 50 the acidity or conductivity of the stock of second mineralizing concentrate solution collected in the second concentrate stock tank 66B. In some embodiments, second concentrate stock tank 66B optionally comprises a level meter, configured to provide information about the level of second mineralizing concentrate solution in concentrate stock tank 66B. In some embodiments, concentrate stock tank 66B includes a temperature sensor and transmitter (not shown), configured to convey to the controller (not shown) of system 50 the temperature measurement of second mineralizing concentrate solution in concentrate stock tank 66B.

System 50 further comprises first mixing module 70A and second mixing module 70B. Mixing modules 70A and 70B of system 50 are connected to first concentrate stock tank 66A and second concentrate stock tank 66B, respectively. Mixing modules 70A and 70B are configured for combining a predefined or dosed amount of mineralizing concentrate solution, with the primary portion of distilled water input 52 in primary conduit 58. At least one of mixing modules 70A and 70B or another component shared with mixing modules 70A and 70B are/is further configured for mixing the predefined or dosed amount of mineralizing concentrate solution, with primary portion of distilled water input 52 in primary conduit 58, so as to produce a homogenous mixture of mineralized solution.

For example, mixing modules 70A and 70B optionally include a turbulence inducing part, to optimize the mixture between the primary portion of distilled water input 52 in primary conduit 58 and a predefined amount of mineralizing concentrate solution. Mixing modules 70A and 70B facilitate the obtaining of a homogeneous mixture as well as dosing of the mineralizing concentrate solutions. Mixing modules 70A and 70B of system 50 further comprise a dosimeter (not known) configured to measure and/or inject a predefined amount of mineralizing concentrate solution, as required by the consumer.

In some preferred embodiments, system 50 further comprises a distilled water storage tank (not shown), disposed in-between distilled water input 52 and mixing modules 70A and 70B. In such embodiments, where a distilled water storage tank (not shown) is implemented in-between distilled water input 52 and mixing modules 70A and 70B, the distilled water storage tank (not shown) is preferably further comprises a cooling device, configured for chilling down the contents of the distilled water storage tank (not shown), preferably to a temperature of about +4 degrees Celsius. In such embodiments, distilled water storage tank (not shown) in-between distilled water input 52 and mixing modules 70A and 70B preferably further comprises an ultraviolet (UV) lamp, configured for disinfecting the interior and/or contents of the distilled water storage tank (not shown).

In such embodiments, where a distilled water storage tank (not shown) is implemented in-between distilled water input 52 and mixing modules 70A and 70B, the distilled water storage tank (not shown) further optionally includes a level meter, configured to provide information about the level of the distilled water stored in the distilled water storage tank (not shown). In such embodiments, where a distilled water storage tank (not shown) is implemented in-between distilled water input 52 and mixing modules 70A and 70B, the distilled water storage tank (not shown) optionally further includes a temperature sensor and transmitter (not shown), configured to convey to the controller (not shown) of system 50 the temperature measurement of the water in the distilled water storage tank (not shown).

In some preferred embodiments, system 50 further comprises a salt concentrate storage tank (not shown). In such embodiments, where the salt concentrate storage tank (not shown) is implemented, the salt concentrate storage tank (not shown) comprises an inlet and/or outlet pressure relief valve (not shown). In some examples, the salt concentrate is a saturated NaCl solution. Addition of NaCl or other salt concentrate solution in minute amounts is configured for altering the taste of the water, thereby conferring to the dispensed water the desired flavor quality. Typically, the salt concentrate storage tank (not shown) is non-replenishable from a column, in the sense of first and second concentrate stock tanks 66A and 66B, but rather is replenishable or filled directly with a liquid salt concentrate solution, from a dedicated external inlet.

In some examples the inlet and/or outlet pressure relief valve (not shown) functions autonomously, upon exceeding a predetermined pressure threshold; whereas in other examples the inlet and/or outlet pressure relief valve (not shown) is controlled by electric controller, configured for opening and/or closing the pressure relief valve (not shown) upon demand. In such embodiments, where the salt concentrate storage tank (not shown) is implemented, the salt concentrate storage tank (not shown) typically comprises an electrical conductivity or EC meter (not shown) and/or a pH meter, configured to monitor and convey to the controller (not shown) of system 50 the salinity or conductivity of the salt concentrate solution stock in the salt concentrate storage tank (not shown).

In some embodiments, salt concentrate storage tank (not shown) optionally comprises a level meter, configured to provide information about the level of salt in salt concentrate storage tank (not shown) and preferably configured to convey to the controller (not shown) of system 50 the level measurement of the salt concentrate in salt concentrate storage tank (not shown).

In such embodiments, where the salt concentrate storage tank (not shown) is implemented, system 50 typically further comprises an additional mixing module (not shown) configured for combining a predefined or dosed amount of salt concentrate solution, with the primary portion of distilled water input 52 in primary conduit 58. The additional mixing module (not shown) is typically configured for mixing a predefined or dosed amount of salt concentrate solution, with primary portion of distilled water input 52 in primary conduit 58, so as to produce a homogenous mixture of mineralized solution.

In some embodiments, system 50 further comprises mechanical filter, typically a micronic or ultrafilter, and/or aeration and/or degasification and CO2 removal module 71. In some embodiments, module 71 is configured for mechanical filtration, for removing micronic particles and/or microorganisms from the homogenous mixture of mineralized water, which may precipitate into first and second concentrate stock tanks 66A and 66B, from first and second concentrate stock tanks 66A and 66B, respectively. Alternatively, in some embodiments, module 71 is configured for degasification and particularly for removal of CO2, from first and second concentrates in first and second concentrate stock tanks 66A and 66B, respectively, for instance by circulating the homogenous mixture of mineralized water, downstream to mixing modules 70A and 70B. Alternatively, in some embodiments, module 71 is configured for aerating the homogenous mixture of mineralized water, by sparging ambient, preferably prefiltered, air through the homogenous mixture of mineralized water. In some embodiments, system 50 further comprises an electrical conductivity or EC meter (not shown) and/or a pH meter and/or pH sensor and/or salinity sensor and/or total dissolved solids (TDS) sensor, downstream to module 71 , configured to monitor and convey to the controller (not shown) of system 50 the acidity and/or conductivity of the of the mineralized water mixture. In some embodiments, system 50 further comprises, a drainage outlet (not shown), downstream to module 71 and typically downstream to aforesaid electrical conductivity or EC meter (not shown) and/or a pH meter and/or pH sensor and/or salinity sensor and/or total dissolved solids (TDS) sensor. The drainage outlet (not shown) is configured to drain distilled water of distilled water input 52 from primary conduit 58 and/or the first mineralizing concentrate solution in concentrate stock tank 66A and/or the second mineralizing concentrate solution in concentrate stock tank 66B.

System 50 further comprises dispensing module 72. System 50 preferably comprises a filter and/or aeration and/or degasification and CO2 removal module 71, upstream to dispensing module 72. Dispensing module 72 of system 50 is configured for dispensing mineralized water mixture to end user consumer. In some examples dispensing module 72 comprises a tap (not shown). Tap's opening is arranged vertically downwards, so that the water poured out gravitationally fall underneath the tap (not shown). In some examples dispensing module 72 comprises a heater. In some examples dispensing module 72 comprises a heater, which is fed-in directly from distilled water input 52, thereby the heated water dispensed is distilled water from input 52 and not the homogenous mixture of mineralized water, resulting the mixing modules 70A and 70B.

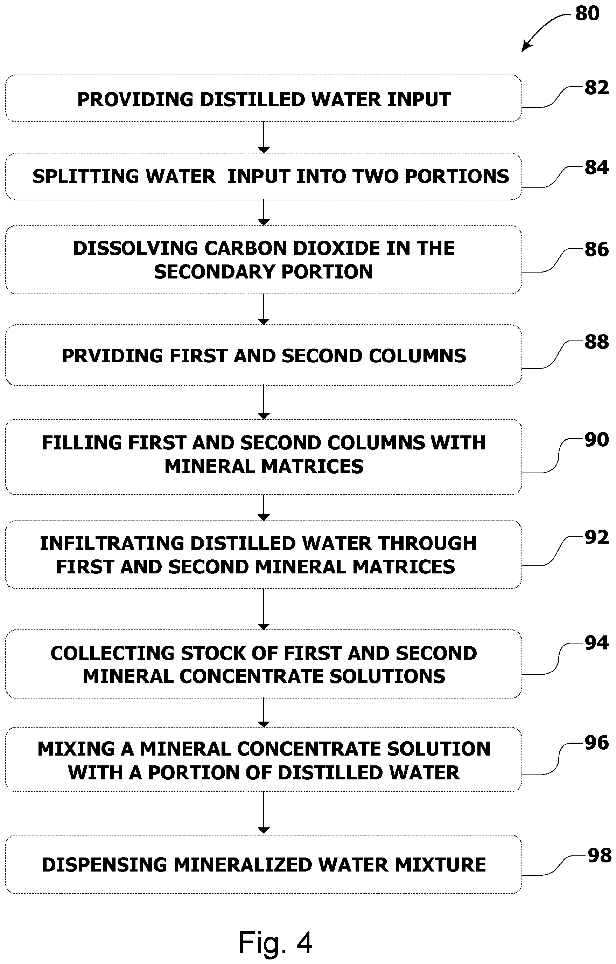

In accordance with some embodiments of the present invention, reference is now made to FIG 4, showing a flowchart of method 80 of mineralizing distilled water. Method 80 includes a step 82 of providing an input of distilled water. Particularly, as described above, distilled water input 12, is characterized by having a significantly reduced or eliminated mineral concentration. It should be appreciated however that distilled water, as defined hereinabove, is considered distilled regardless of the nature of the distillation process implemented to produce it.

Method 80 further includes step 84 of splitting distilled water input into a primary portion and a secondary portion. Method 80 includes further step 86 of dissolving carbon dioxide in first secondary portion of distilled water input. In some examples, carbon dioxide, in gaseous form, can be injected in secondary portion of distilled water input for pH regulation. The step 86 may be necessary to promote the dissolution of the minerals or to significantly acidify the distilled water.

Method 80 also includes step 88 of providing first and second column comprising an interior volume, andfurther includes a step 90 of filling interior volume of first and second column with respectively first and second mineral matrices, respectively. Method 80 includes a step 92 of infiltrating secondary portion of distilled water input through first and second mineral matrix, respectively, in first and second columns, thereby generating a first and second mineralizing concentrate solution.

Method 80 further includes a step 94 of collecting stock of the first and second mineralized concentrate solutions. In some embodiments, and step 96 of controllably combining a predefined amount of the first and second mineralizing concentrate solutions with primary portion of distilled water input; thereby producing homogeneous mineralized water mixture. As described in FIG 3, mineralized water mixtures are obtained by mixing modules 70A and 70B.

Method 80 also includes step 98 of dispensing a homogenous mixture of first and second mineral concentrates with distilled water or simply the customable mineralized water to the consumer. Consequently, the customable mineralized water mixture is made available through a dispensing module to the consumer, upon demand.

In some embodiments, method 80 includes a step of mechanically filtering and/or aerating and/or degasifying the customable mineralized water, prior dispensing to the customable mineralized water to the consumer at step 98. In some embodiments, the step of degasifying the customable mineralized water, prior dispensing to the customable mineralized water to the consumer at step 98 particularly includes removal of CO2.

In some examples step 98 of dispensing the customable mineralized water to the consumer comprises heating. In some examples heating is applied to water fed-in directly from the distilled water input, thereby the heated water dispensed during step 98 is distilled water from input 52 and not the homogenous mixture of mineralized water, resulting mixing modules 70A and 70B.

In some embodiments, additionally to method 80, there is at least one step or a set of steps (not shown) comprising at least one maintenance modus operand! configured for sterilization, disinfection, sanitization and/or pasteurization maintenance of the system for mineralizing distilled water. The maintenance modus operandi configured for sterilization, disinfection, sanitization and/or pasteurization are achievable by several different means. Periodic drainage, for instance on a daily basis, of the residual water downstream to mixing modules 70A and 70B provides for effecting purging any microfauna, biofilm and/or microorganisms that may develop downstream to mixing modules 70A and 70B, constitutes one example of the means by which the maintenance modus operand! configured for sterilization, disinfection, sanitization and/or pasteurization are achievable. Periodically, such as on a semi-daily basis, effecting a hypoosmotic shock, for instance by flushing the residual water downstream to mixing modules 70A and 70B with distilled water from input 52, and/or a hyperosmotic shock, for instance by flushing the residual water downstream to mixing modules 70A and 70B with the first and/or second mineralizing concentrate solution, and/or switching between the hypoosmotic shock and the hyperosmotic shock, as set forth hereinabove, constitutes another example of the means by which the maintenance modus operandi configured for sterilization, disinfection, sanitization and/or pasteurization are achievable.

In some embodiments, additionally to method 80, there is at least one step or a set of steps (not shown) comprising a maintenance modus operandi configured for assurance of quality of the distilled water from input 52 as well as configured for assurance of quality of the first and/or second mineralizing concentrate solution/s and indication of possible deletion of mineral matrix/matrices in either of the mineralizing columns. Periodically, such as on a semi-daily basis, flushing the residual water downstream to mixing modules 70A and 70B, with distilled water from input 52, while measuring electrical conductivity (EC) and/or a pH meter and/or salinity and/or total dissolved solids (TDS), downstream to mixing modules 70A and 70B constitutes an example of the means by which the maintenance modus operandi configured for assurance of the quality of the distilled water from input 52 is achievable. Periodically, such as on a semi-daily basis, flushing the residual water downstream to mixing modules 70A and 70B, with the first and/or second mineralizing concentrate solution/s, while measuring electrical conductivity (EC) and/or pH and/or salinity and/or total dissolved solids (TDS), downstream to mixing modules 70A and 70B, constitutes another example of the means by which the maintenance modus operandi configured for assurance of the quality of the of the first and/or second mineralizing concentrate solution/s is achievable. Upon detection of lower electrical conductivity (EC) and/or lower/higher pH and/or lower salinity and/or lower total dissolved solids (TDS), than a predetermined value, downstream to mixing modules 70A and 70B, while flushing the residual water downstream to mixing modules 70A and 70B, with the first and/or second mineralizing concentrate solution/s, an indication of possible deletion of mineral matrix/matrices in the mineralizing column exhibiting the excessive value is deducible and typically a respective message or signal are communicated to the user, specifying that the mineral matrix in the specific mineralizing column is running low and that refilling of the mineral matrix in the specific mineralizing column is maybe necessary, to ensure further proper operation of the system.

## Claims

1. A system (50) for mineralizing distilled water comprises:
(a) an inlet (52) for distilled water input, wherein said water input with substantially reduced mineral content;
(b) a splitter (54) operationally connected to said inlet, configured for splitting said input into a primary portion and secondary portion;
(c) at least one primary conduit (58) operationally connected to said splitter, configured for conveying said primary portion of said distilled water input;
(d) at least one secondary conduit (56) configured for conveying said secondary portion of said distilled water input;
(e) a carbonator (62) including a carbon dioxide supply module (60), the carbonator being operationally connected to said at least one secondary conduit, configured for dissolving carbon dioxide in said secondary portion of said distilled water input;
(f) at least one first column (62A), comprising an interior volume, operationally connected to said carbonator;
(g) at least one second column (62B), comprising an interior volume, operationally connected to said carbonator;
(h) a first mineral matrix (64A) filling said interior volume of said at least one first column (62A), said mineral matrix is configured for being infiltrated by water of said secondary portion of said distilled water input and thereby generating a first mineralizing concentrate solution;
(i) a second mineral matrix (64B) filling said interior volume of said at least one second column (62B), said mineral matrix is configured for being infiltrated by water of said secondary portion of said distilled water input and thereby generating a second mineralizing concentrate solution, the first and second mineral matrices (64A, 64B) of said first and second columns (62A, 62B) being different to form different mineral concentrate solutions;
(j) a first concentrate stock tank (66A), operationally connected to said at least one first column (62A), configured for collecting a stock of said first mineralizing concentrate solution;
(k) a second concentrate stock tank (66B), operationally connected to said at least one second column (62B), configured for collecting a stock of said second mineralizing concentrate solution;
(l) a first mixing module (70A) operationally connected to said first concentrate stock tank (66A), said first mixing module including a dosimeter configured for combining a predefined amount of said first mineralizing concentrate solution with said primary portion of said distilled water input in said first conduit;
(m) a second mixing module (70B) operationally connected to said second concentrate stock tank (66B), said second mixing module including a dosimeter configured for combining a predefined amount of said second mineralizing concentrate solution with said primary portion of said distilled water input in said first conduit, thereby controllably combining a predefined amount of the first and the second mineralizing concentrate solutions with the primary portion of the distilled water input (52);
(n) a dispensing module (72) operationally connected to said first and said second mixing modules, configured for dispensing a homogenous mineralized water mixture to a consumer.

2. The system according to claim 1, wherein said distilled water input (52) is pressurized.

3. The system according to claim 1, wherein said splitter (54) is connected to a flow regulator configured to control a pressure of said distilled water input.

4. The system according to claim 1, wherein said at least one column is fillable with at least one member selected form the group consisting of: minerals and ion exchange resin.

5. The system according to claim 1, wherein at least one of said columns (62A) contains a mineral matrix containing dolomite or calcite and at least one of said columns (62B) contains another mineral matrix different to the other column.

6. The system according to claim 1, wherein at least one of said concentrate stock tanks (66A, 66B) further comprising a pump, configured for closed loop circulation of a concentrate contained therein.

7. The system according to claim 1 further comprising a salt concentrate tank having an inlet and/or outlet pressure relief valve and an additional mixing module configured for combining a predefined or dosed amount of salt concentrate solution with the primary portion of distilled water input (52).

8. A process (80) of mineralizing distilled water comprises the steps of:
(a) providing an input of distilled water with substantially reduced mineral content (82);
(b) splitting said input of distilled water into: a primary portion, a secondary portion, configured for generating a mineralizing concentrate solution (84);
(c) dissolving carbon dioxide in said secondary portion of said distilled water input (86);
(d) providing at least one first column comprising an interior volume (88);
(e) providing at least one second column comprising an interior volume (88);
(f) filling said interior volume of said first column with a first mineral matrix (90);
(g) filling said interior volume of said second column with a second mineral matrix (90);
(h) infiltrating said secondary portion of said distilled water input through said first mineral matrix in said first column, thereby generating a first mineralizing concentrate solution (92);
(i) infiltrating said secondary portion of said distilled water input through said second mineral matrix in said second column, thereby generating a second mineralizing concentrate solution (92), the first and second mineral matrices of said first and second columns being different to form different mineral concentrate solutions;
(j) collecting said a stock of said first mineralizing concentrate solution (94);
(k) collecting said a stock of said second mineralizing concentrate solution (94);
(l) controllably combining a predefined amount of said first mineralizing concentrate solution with said primary portion of said distilled water input (96);
(m) controllably combining a predefined amount of said second mineralizing concentrate solution with said primary portion of said distilled water input (96), thereby controllably combining a predefined amount of the first and the second mineralizing concentrate solutions with the primary portion of the distilled water input (52);
(n) dispensing a homogenous mineralized water mixture to a consumer (98).

9. The process, according to claim 8, comprises pressurization of said distilled water input.

10. The process, according to claim 8, comprises a step of controlling the pressure of said distilled water input.

11. The process according to claim 8, comprises filling at least one of said columns with dolomite or calcite and filling at least one of said columns with another mineral matrix different to the other column.

12. The process according to claim 8, said dispensing further comprises at least one member selected from the group consisting of: cooling said mineralized water mixture, heating said mineralized water mixture and carbonating said mineralized water mixture.

## Patentansprüche

1. System (50) zur Mineralisierung von destilliertem Wasser, umfassend:
(a) einen Einlass (52) für einen Eintrag von destilliertem Wasser, wobei das Wasser mit einem wesentlich verringertem Mineralgehalt eingetragen wird;
(b) einen Teiler (54), der betriebsfähig mit dem Einlass verbunden ist und dazu konfiguriert ist, den Eintrag in einen primären Teil und einen sekundären Teil zu teilen;
(c) mindestens eine primäre Leitung (58), die betriebsfähig mit dem Teiler verbunden ist und zum Fördern des primären Teils des Eintrags von destilliertem Wasser konfiguriert ist;
(d) mindestens eine sekundäre Leitung (56), die zum Fördern des sekundären Teils des Eintrags von destilliertem Wasser konfiguriert ist;
(e) einen Karbonisierer (62), beinhaltend ein Kohlendioxidzufuhrmodul (60), wobei der Karbonisierer betriebsfähig mit der mindestens einen sekundären Leitung verbunden ist und zum Lösen von Kohlendioxid in dem sekundären Teil des Eintrags von destilliertem Wasser konfiguriert ist;
(f) mindestens eine erste Kolonne (62A), umfassend ein Innenvolumen, die betriebsfähig mit dem Karbonisierer verbunden ist;
(g) mindestens eine zweite Kolonne (62B), umfassend ein Innenvolumen, die betriebsfähig mit dem Karbonisierer verbunden ist;
(h) eine erste Mineralmatrix (64A), die das Innenvolumen der mindestens einen ersten Kolonne (62A) füllt, wobei die Mineralmatrix dazu konfiguriert ist, durch Wasser des sekundären Teils des Eintrags von destilliertem Wasser infiltriert zu werden und dadurch eine erste mineralisierende Konzentratlösung zu erzeugen;
(i) eine zweite Mineralmatrix (64B), die das Innenvolumen der mindestens einen zweiten Kolonne (62B) füllt, wobei die Mineralmatrix dazu konfiguriert ist, durch Wasser des sekundären Teils des Eintrags von destilliertem Wasser infiltriert zu werden und dadurch eine zweite mineralisierende Konzentratlösung zu erzeugen, wobei die erste und die zweite Mineralmatrix (64A, 64B) der ersten und der zweiten Kolonne (62A, 62B) unterschiedlich sind, um unterschiedliche Mineralkonzentratlösungen zu bilden;
(j) einen ersten Konzentratstammlösungstank (66A), der betriebsfähig mit der mindestens einen ersten Kolonne (62A) verbunden ist und zum Sammeln einer Stammlösung der ersten mineralisierenden Konzentratlösung konfiguriert ist;
(k) einen zweiten Konzentratstammlösungstank (66B), der betriebsfähig mit der mindestens einen zweiten Kolonne (62B) verbunden ist und zum Sammeln einer Stammlösung der zweiten mineralisierenden Konzentratlösung konfiguriert ist;
(l) ein erstes Mischmodul (70A), das betriebsfähig mit dem ersten Konzentratstammlösungstank (66A) verbunden ist, wobei das erste Mischmodul ein Dosimeter beinhaltet, das zum Kombinieren einer vordefinierten Menge der ersten mineralisierenden Konzentratlösung mit dem primären Teil des Eintrags von destilliertem Wasser in der ersten Leitung konfiguriert ist;
(m) ein zweites Mischmodul (70B), das betriebsfähig mit dem zweiten Konzentratstammlösungstank (66B) verbunden ist, wobei das zweite Mischmodul ein Dosimeter beinhaltet, das zum Kombinieren einer vordefinierten Menge der zweiten mineralisierenden Konzentratlösung mit dem primären Teil des Eintrags von destilliertem Wasser in der ersten Leitung konfiguriert ist, wodurch eine vordefinierte Menge der ersten und der zweiten mineralisierenden Konzentratlösung mit dem primären Teil des Eintrags (52) von destilliertem Wasser steuerbar kombiniert wird;
(n) ein Abgabemodul (72), das betriebsfähig mit dem ersten und dem zweiten Mischmodul verbunden ist und zum Abgeben eines homogenen mineralisierten Wassergemischs an einen Verbraucher konfiguriert ist.

2. System nach Anspruch 1, wobei der Eintrag (52) von destilliertem Wasser mit Druck beaufschlagt wird.

3. System nach Anspruch 1, wobei der Teiler (54) mit einem Durchflussregler verbunden ist, der dazu konfiguriert ist, einen Druck des Eintrags von destilliertem Wasser zu steuern.

4. System nach Anspruch 1, wobei die mindestens eine Kolonne mit mindestens einem Element füllbar ist, das aus der Gruppe bestehend aus Mineralien und Ionenaustauscherharz ausgewählt ist.

5. System nach Anspruch 1, wobei mindestens eine der Kolonnen (62A) eine Mineralmatrix, enthaltend Dolomit oder Calcit, enthält und mindestens eine der Kolonnen (62B) eine andere Mineralmatrix enthält, die sich von der anderen Kolonne unterscheidet.

6. System nach Anspruch 1, wobei mindestens einer der Konzentratstammlösungstanks (66A, 66B) weiterhin eine Pumpe umfasst, die zur Kreislaufführung eines darin enthaltenen Konzentrats konfiguriert ist.

7. System nach Anspruch 1, weiterhin umfassend einen Salzkonzentrattank mit einem Einlass- und/oder Auslassdruckminderungsventil und ein zusätzliches Mischmodul, das zum Kombinieren einer vordefinierten oder zudosierten Menge einer Salzkonzentratlösung mit dem primären Teil des Eintrags (52) von destilliertem Wasser konfiguriert ist.

8. Verfahren (80) zur Mineralisierung von destilliertem Wasser, umfassend die Schritte:
(a) Bereitstellen eines Eintrags von destilliertem Wasser mit wesentlich verringertem Mineralgehalt (82);
(b) Teilen des Eintrags von destilliertem Wasser in: einen primären Teil, einen sekundären Teil, zum Erzeugen einer mineralisierenden Konzentratlösung konfiguriert (84);
(c) Lösen von Kohlendioxid in dem sekundären Teil des Eintrags von destilliertem Wasser (86);
(d) Bereitstellen mindestens einer ersten Kolonne, umfassend ein Innenvolumen (88);
(e) Bereitstellen mindestens einer zweiten Kolonne, umfassend ein Innenvolumen (88);
(f) Füllen des Innenvolumens der ersten Kolonne mit einer ersten Mineralmatrix (90);
(g) Füllen des Innenvolumens der zweiten Kolonne mit einer zweiten Mineralmatrix (90);
(h) Infiltrieren des sekundären Teils des Eintrags von destilliertem Wasser durch die erste Mineralmatrix in der ersten Kolonne, wodurch eine erste mineralisierende Konzentratlösung erzeugt wird (92);
(i) Infiltrieren des sekundären Teils des Eintrags von destilliertem Wasser durch die zweite Mineralmatrix in der zweiten Kolonne, wodurch eine zweite mineralisierende Konzentratlösung erzeugt wird (92), wobei die erste und die zweite Mineralmatrix der ersten und der zweiten Kolonne unterschiedlich sind, um unterschiedliche Mineralkonzentratlösungen zu bilden;
(j) Sammeln einer Stammlösung der ersten mineralisierenden Konzentratlösung (94);
(k) Sammeln einer Stammlösung der zweiten mineralisierenden Konzentratlösung (94);
(l) steuerbares Kombinieren einer vordefinierten Menge der ersten mineralisierenden Konzentratlösung mit dem primären Teil des Eintrags von destilliertem Wasser (96);
(m) steuerbares Kombinieren einer vordefinierten Menge der zweiten mineralisierenden Konzentratlösung mit dem primären Teil des Eintrags von destilliertem Wasser (96), wodurch eine vordefinierte Menge der ersten und der zweiten mineralisierenden Konzentratlösung mit dem primären Teil des Eintrags (52) von destilliertem Wasser steuerbar kombiniert wird;
(n) Abgeben eines homogenen mineralisierten Wassergemischs an einen Verbraucher (98).

9. Verfahren nach Anspruch 8, umfassend eine Druckbeaufschlagung des Eintrags von destilliertem Wasser.

10. Verfahren nach Anspruch 8, umfassend einen Schritt eines Steuerns des Drucks des Eintrags von destilliertem Wasser.

11. Verfahren nach Anspruch 8, umfassend ein Füllen mindestens einer der Kolonnen mit Dolomit oder Calcit und ein Füllen mindestens einer der Kolonnen mit einer anderen Mineralmatrix, die sich von der anderen Kolonne unterscheidet.

12. Verfahren nach Anspruch 8, wobei das Abgeben weiterhin mindestens ein Element umfasst, das ausgewählt ist aus der Gruppe bestehend aus: Kühlen des mineralisierten Wassergemischs, Erhitzen des mineralisierten Wassergemischs und Karbonisieren des mineralisierten Wassergemischs.

## Revendications

1. Un système (50) destiné à minéralisée une eau distillée comprend :
(a) un orifice d'entrée (52) pour un apport en eau distillée, dans lequel ledit apport d'eau a une teneur en minéraux sensiblement réduite ;
(b) un séparateur (54) raccordé de manière opérationnelle audit orifice d'entrée, configuré pour séparer ledit apport en une partie primaire et une partie secondaire ;
(c) un ou plusieurs conduits primaires (58) raccordés de manière opérationnelle audit séparateur, configurés pour transporter ladite partie primaire dudit apport en eau distillée ;
(d) un ou plusieurs conduits secondaires (56) configurés pour transporter ladite partie secondaire dudit apport en eau distillée ;
(e) un saturateur (62) incluant un module d'alimentation en dioxyde de carbone (60), le saturateur étant raccordé de manière opérationnelle audit ou auxdits conduits secondaires, configuré pour dissoudre le dioxyde de carbone dans ladite partie secondaire dudit apport en eau distillée ;
(f) une ou plusieurs premières colonnes (62A), comprenant un volume intérieur, raccordées de manière opérationnelle audit saturateur ;
(g) une ou plusieurs deuxièmes colonnes (62B), comprenant un volume intérieur, raccordées de manière opérationnelle audit saturateur ;
(h) une première matrice minérale (64A) remplissant ledit volume intérieur de ladite ou desdites premières colonnes (62A), ladite matrice minérale est configurée pour être infiltrée par l'eau de ladite partie secondaire dudit apport en eau distillée, et générant ainsi une première solution de concentré de minéralisation ;
(i) une deuxième matrice minérale (64B) remplissant ledit volume intérieur de ladite ou desdites deuxièmes colonnes (628), ladite matrice minérale est configurée pour être infiltrée par l'eau de ladite partie secondaire dudit apport en eau distillée, et générant ainsi une deuxième solution de concentré de minéralisation, les première et deuxième matrices minérales (64A, 64B) desdites première et deuxièmes colonnes (62A, 62B) étant différentes pour former des solutions de concentré de minéraux différentes ;
(j) un premier réservoir de stock de concentré (66A), raccordé de manière opérationnelle à ladite ou auxdites premières colonnes (62A), configuré pour collecter un stock de ladite première solution de concentré de minéralisation ;
(k) un deuxième réservoir de stock de concentré (66B), raccordé de manière opérationnelle à ladite ou auxdites deuxièmes colonnes (628), configuré pour collecter un stock de ladite deuxième solution de concentré de minéralisation ;
(l) un premier module de mélangeage (70A) raccordé de manière opérationnelle audit premier réservoir de stock de concentré (66A), ledit premier module de mélangeage incluant un dosimètre configuré pour combiner une quantité prédéfinie de ladite première solution de concentré de minéralisation avec ladite partie primaire dudit apport en eau distillée dans ledit premier conduit ;
(m) un deuxième module de mélangeage (708) raccordé de manière opérationnelle audit deuxième réservoir de stock de concentré (668), ledit deuxième module de mélangeage incluant un dosimètre configuré pour combiner une quantité prédéfinie de ladite deuxième solution de concentré de minéralisation avec ladite partie primaire dudit apport en eau distillée dans ledit premier conduit, ce qui combine ainsi de manière régulable une quantité prédéfinie de la première et de la deuxième solutions de concentré de minéralisation avec la partie primaire de l'apport en eau distillée (52) ;
(n) un module de distribution (72) raccordé de manière opérationnelle audit premier et audit deuxième modules de mélangeage, configuré pour distribuer un mélange d'eau minéralisée homogène à un consommateur.

2. Le système selon la revendication 1, dans lequel ledit apport en eau distillée (52) est pressurisé.

3. Le système selon la revendication 1, dans lequel ledit séparateur (54) est raccordé à un régulateur de flux configuré pour réguler une pression dudit apport en eau distillée.

4. Le système selon la revendication 1, dans lequel ladite ou lesdites colonnes peuvent être remplies avec un ou plusieurs éléments sélectionnés dans le groupe constitué de : minéraux et résine échangeuse d'ions.

5. Le système selon la revendication 1, dans lequel une ou plusieurs desdites colonnes (62A) contiennent une matrice minérale contenant du dolomite ou du calcite, et une ou plusieurs desdites colonnes (62B) contiennent une autre matrice minérale différente de l'autre colonne.

6. Le système selon la revendication 1, dans lequel un ou plusieurs desdits réservoirs de stock de concentré (66A, 66B) comprennent en outre une pompe, configurée pour une circulation en boucle fermée d'un concentré y étant contenu.

7. Le système selon la revendication 1, comprenant en outre un réservoir de concentré de sel ayant une soupape de sûreté d'entrée et/ou de sortie et un module de mélangeage additionnel configuré pour combiner une quantité prédéfinie ou dosée de solution de concentré de sel avec la partie primaire d'apport en eau distillée (52).

8. Un procédé (80) de minéralisation d'une eau distillée comprend les étapes de :
(a) fourniture d'un apport d'eau distillée ayant une teneur en minéraux sensiblement réduite (82) ;
(b) séparation dudit apport d'eau distillée en : une partie primaire, une partie secondaire, configuré pour générer une solution de concentré de minéralisation (84) ;
(c) dissolution de dioxyde de carbone dans ladite partie secondaire dudit apport en eau distillée (86) ;
(d) fourniture d'une ou plusieurs premières colonnes comprenant un volume intérieur (88) ;
(e) fourniture d'une ou plusieurs deuxièmes colonnes comprenant un volume intérieur (88) ;
(f) remplissage dudit volume intérieur de ladite première colonne avec une première matrice minérale (90) ;
(g) remplissage dudit volume intérieur de ladite deuxième colonne avec une deuxième matrice minérale (90) ;
(h) infiltration de ladite partie secondaire dudit apport en eau distillée par ladite première matrice minérale dans ladite première colonne, ce qui génère ainsi une première solution de concentré de minéralisation (92) ;
(i) infiltration de ladite partie secondaire dudit apport en eau distillée par ladite deuxième matrice minérale dans ladite deuxième colonne, ce qui génère ainsi une deuxième solution de concentré de minéralisation (92), les première et deuxième matrices minérales desdites première et deuxième colonnes étant différentes pour former des solutions de concentré de minéraux différentes ;
(j) collecte dudit stock de ladite première solution de concentré de minéralisation (94) ;
(k) collecte dudit stock de ladite deuxième solution de concentré de minéralisation (94) ;
(l) combinaison de manière régulable d'une quantité prédéfinie de ladite première solution de concentré de minéralisation avec ladite partie primaire dudit apport en eau distillée (96) ;
(m) combinaison de manière régulable d'une quantité prédéfinie de ladite deuxième solution de concentré de minéralisation avec ladite partie primaire dudit apport en eau distillée (96), ce qui combine ainsi de manière régulable une quantité prédéfinie de la première et de la deuxième solutions de concentré de minéralisation avec la partie primaire de l'apport en eau distillée (52) ;
(n) distribution d'un mélange d'eau minéralisée homogène à un consommateur (98).

9. Le procédé selon la revendication 8, comprend une pressurisation dudit apport en eau distillée.

10. Le procédé selon la revendication 8, comprend une étape de régulation de la pression dudit apport en eau distillée.

11. Le procédé selon la revendication 8, comprend le remplissage d'une ou plusieurs desdites colonnes avec du dolomite ou du calcite, et le remplissage d'une ou plusieurs desdites colonnes avec une autre matrice minérale différente de l'autre colonne.

12. Le procédé selon la revendication 8, ladite distribution comprend en outre un ou plusieurs éléments sélectionnés dans le groupe constitué de : refroidissement dudit mélange d'eau minéralisée, chauffage dudit mélange d'eau minéralisée et saturation dudit mélange d'eau minéralisée.
